# EUROPEAN PATENT APPLICATION

(11) **EP 4 496 141 A1**
(43) Date of publication of application: **22.01.2025**
(21) Application number: 23769748.7
(22) Date of filing: 14.03.2023
(51) Int. Cl.: H01R 31/06, H01B 7/40, B60L 53/16

(54) **NOVEL SHIELDING MATERIAL BASED CONNECTOR ASSEMBLY, AND VEHICLE**

(30) Priority: 14.03.2022 CN 202210250047
(71) Applicant: Jilin Zhong Ying High Technology Co., Ltd., Jilin 130028 (CN)
(72) Inventor: WANG, Chao, Changchun, Jilin 130028 (CN)
(74) Representative: Dehns
(86) International application number: PCT/CN2023/081259
(87) International publication number: WO 2023/174246

(57) **Abstract**

Disclosed in the present disclosure are a connector assembly made of a novel shielding material and a vehicle. The novel connector assembly includes an electric connection skeleton and connectors connected to two ends of the electric connection skeleton, in which each of the connectors internally includes a connection terminal and an inner shell with shielding effectiveness, the two ends of the electric connection skeleton are electrically connected to connection terminals, respectively, an outer periphery of the electric connection skeleton is coated with an insulating layer, the insulating layer internally includes conductive particles in a radial direction, and at least one location of the conductive particles is distributed in the insulating layer in a density-unevenness manner. According to the novel connector assembly made of the shielding material of the present disclosure, the conductive particles are included in the insulating layer to replace a braided shielding net, so that the use of equipment for braiding the shielding net is reduced, the occupied area is small, the processing cost of the cables is reduced, and the production cost of the connector is reduced.

## Description

### RELATED APPLICATION

The present application claims the priority of the Chinese Patent Application No. 202210250047.8, filed on March 14, 2022, and entitled "CONNECTOR ASSEMBLY MADE OF NOVEL SHIELDING MATERIAL AND VEHICLE", the entire content of which is incorporated herein by reference.

### TECHNICAL FIELD

The present disclosure relates to the technical field of automotive electrical appliances, and more specificlly, to a connector assembly made of a novel shielding material and a vehicle.

### BACKGROUND

With the increasing popularity of new energy vehicles, equipment and facilities for charging the new energy vehicles have also developed. Because the connector assembly on the new energy vehicles needs to meet the requirements of driving high-power motors, the transmission current is relatively large, and the diameters of high-voltage cables on the connector assembly are also increased. At present, most of high voltage cables on the connector assembly use multi-core copper cables, which are heavy and expensive, and thus become an obstacle to the popularization of the new energy vehicles. In addition, although the multi-core cables are soft and can be convenient for processing and wiring, due to its coarse diameter and significant weight, the cables may frequently rub against a vehicle shell in the process of vehicle driving, resulting in damage to the insulating layers of the cables and causing high-voltage discharge, which mildly causes damage to the vehicle and seriously causes serious traffic accidents.

In order to reduce the influence of electromagnetic interference, a conductive cable usually adopts a shielding net to shield the electromagnetic interference. At present, the commonly used shielding net is braided from metal wires, and a shielding braiding machine needs to be added to cable production equipments, so that the equipment price is high, and the occupied area is large, resulting in the price of a shielding cable remains high.

Therefore, there is an urgent need for a low-cost, long-service-life shielding cable and a connector assembly made of a novel shielding material in the technical field of automotive electrical appliances.

### SUMMARY

An objective of the present disclosure is to provide a new technical solution for a connector assembly made of a novel shielding material.

According to a first aspect of the present disclosure, a connector assembly made of a novel shielding material is provided, including an electric connection skeleton and connectors connected to two ends of the electric connection skeleton, in which each of the connectors internally includes a connection terminal and an inner shell with shielding effectiveness, the two ends of the electric connection skeleton are electrically connected to connection terminals, respectively, an outer periphery of the electric connection skeleton is coated with an insulating layer, the insulating layer internally includes conductive particles in a radial direction, and at least one location of the conductive particles is distributed in the insulating layer in a density-unevenness manner.

According to a second aspect of the present disclosure, a vehicle is provided, including the connector assembly made of the novel shielding material described above.

The present disclosure has the beneficial effects:
1. The use of the rigid body, that is, the electric connection skeleton can reduce the diameters of the cables, reduce the weight of the cables, facilitate the installation of the cables, reduce the friction with the vehicle shell, and prolong the service life of the connector assembly.
2. The insulating layer includes the conductive particles in the radial direction, and has a shielding effect to replace a braided shielding net, so that the use of equipment for braiding the shielding net is reduced, the occupied area is small, the processing cost of the cables is reduced, the weight of the cables is reduced, the production process is simplified, the production period is shortened, and the production cost of the connector assembly is reduced.
3. The conductive particles are clamped between an inner surface and an outer surface of the insulating layer, at this time, the inner surface and the outer surface of the insulating layer have an insulating effect, and the conductive layer formed by the conductive particles has a shielding effect, so that a separate shielding net is not required to be arranged outside the insulating layer, which simplifies the production process, does not require to add more equipment, and improves the production efficiency.
4. A shielding connection device is arranged between the inner shell and the conductive layer formed by the conductive particles, so that the conductive layer and the shielding connection device can be fixed and electrically connected first, and then the shielding connection device is assembled to be in contact with and electrically connected to the inner shell, so that the stability of shielding connection is improved, the processing difficulty is reduced, the connection between the conductive layer in the insulating layer and the inner shell is ensured to be firmer, and the shielding effect is better.
5. At least one location of the conductive particles is distributed in the insulating layer in a density-unevenness manner, so that the insulating layer can be arranged in a targeted manner according to the EMC (electromagnetic compatibility) requirement of the whole vehicle, and under the condition of meeting the shielding requirement, the insulating layer with low density of the conductive particles is adopted in some places, so that the cost can be greatly reduced.

Other features of the present disclosure and advantages thereof may become apparent from the following detailed description of exemplary embodiments of the present disclosure with reference to the accompanying drawings.

### BRIEF DESCRIPTION OF THE DRAWINGS

The accompanying drawings, which are incorporated in and constitute a location of the specification, illustrate embodiments of the present disclosure and, together with the description thereof, are used to explain the principles of the present disclosure.
FIG. 1 is a schematic structural diagram of a connector assembly made of a novel shielding material according to the present disclosure;
FIG. 2 is a sectional view of a connection between an inner shell and conductive particles of a connector assembly made of a novel shielding material according to the present disclosure;
FIG. 3 is a sectional view of a connection between an inner shell and conductive particles of the connector assembly made of another novel shielding material according to the present disclosure;
FIG. 4 is a schematic structural diagram of a shielding connection device of a connector assembly made of a novel shielding material according to the present disclosure;
FIG. 5 is a schematic structural diagram of another shielding connection device of a connector assembly made of a novel shielding material according to the present disclosure;
FIG. 6 is an axial cross-sectional view of an electric connection skeleton coated with an insulating layer according to the present disclosure;
FIG. 7 is a radial cross-sectional view of an electric connection skeleton coated with an insulating layer according to the present disclosure; and
FIG. 8 is a radial cross-sectional view of an electric connection skeleton with an insulating layer coated with a shielding connection device according to the present disclosure.

### [reference numerals]:

1. Electric connection skeleton; 2, Connector; 3, Insulating layer; 4, Inner shell; 5, Connection terminal; 6, Shielding connection device; 31, Conductive particle; 32, Recess; 21, Protrusion; 61, Insertion portion; 62, Contact portion.

### DESCRIPTION OF THE EMBODIMENTS

The technical solutions in the embodiments of the present disclosure will be clearly and completely described below with reference to the accompanying drawings in the embodiments of the present disclosure. Obviously, the described embodiments are only a part of the embodiments of the present disclosure, not all of the embodiments. Based on the embodiments in the present disclosure, all other embodiments obtained by those of ordinary skill in the art without creative work are within the scope of protection of the present disclosure.

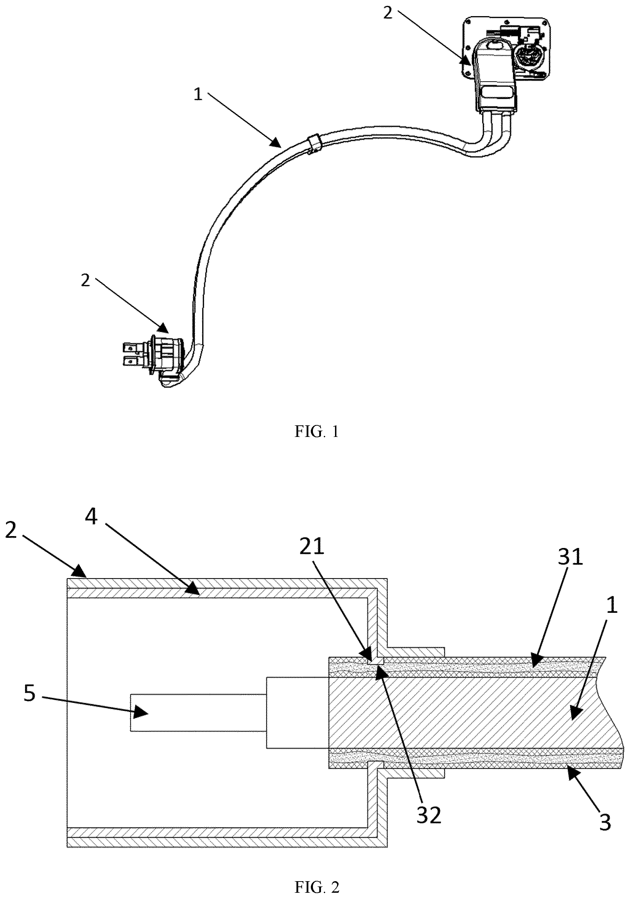

As shown in FIGs 1 to 8, a connector assembly made of a novel shielding material of the present disclosure includes an electric connection skeleton 1 and connectors 2 connected to two ends of the electric connection skeleton 1, in which each of the connectors 2 internally includes a connection terminal 5 and an inner shell 4 with shielding effectiveness, the two ends of the electric connection skeleton 1 are electrically connected to connection terminals 5, respectively, an outer periphery of the electric connection skeleton 1 is coated with an insulating layer 3, the insulating layer 3 internally includes conductive particles 31 in a radial direction, and the conductive particles are distributed with at least one location of non-uniform densitywithin the insulating layer.

In the specific implementation, in order to reduce the influence of electromagnetic interference, a conductive cable usually adopts a shielding net to shield the electromagnetic interference. At present, the commonly used shielding net is braided from metal wires, and a braiding weaving machine needs to be added to cable production equipment, so that the equipment price is high, the occupied area is large, and the production process is increased, resulting in the price of a shielding cable remains high.

The electric connection skeleton 1 is mostly used for transmitting a large current in the vehicle, and a large electromagnetic field is generated when the current passes through. In order to prevent the electromagnetic field generated by the large current from generating electromagnetic interference with electrical appliances in the vehicle to affect the normal operation of other electrical appliances. Therefore, it is necessary to conduct electromagnetic shielding on the electromagnetic field generated by the large current. Data communication cables, on the contrary, transmit electromagnetic signals internally, which may be disturbed by external electromagnetic fields, resulting in distortion of the electromagnetic signals and ineffective transmission of the signals. Therefore, it is necessary to shield external electromagnetic field interference through electromagnetic shielding.

The electromagnetic shielding mainly uses a shielding body to prevent the influence of a high-frequency electromagnetic field, so as to effectively control the radiative propagation of electromagnetic waves from one area to another. The basic principle is to adopt a conductor material with low resistance value to make the shielding body, and utilize the reflection of the electromagnetic waves on the surface of the shielding body, the absorption inside the shielding body and the loss in the transmission process to produce a shielding effect. In addition to the electromagnetic shielding required for the electric connection skeleton 1, connections between the electric connection skeleton and the connector 2, and between the electric connection skeleton and the connection terminal 5 also require special electromagnetic shielding. The two ends of the electric connection skeleton 1 of the present disclosure are respectively connected to the connector 2 and the connection terminal 5, and these connections are arranged in the inner shell 4, the inner shell 4 is electrically connected to a conductive layer formed by the conductive particles 31 in the insulating layer 3 outside the electric connection skeleton 1, so as to achieve a complete shielding effect.

In order to simplify the production process, reduce the wire diameters of the cables and reduce the production cost, in the present disclosure, the insulating layer includes the conductive particles in the radial direction, the conductive layer is formed by the conductive particles, and the insulating layer has a shielding effect at the moment to replace a braided shielding net, so that the use of equipment for braiding the shielding net is reduced, the occupied area is small, the processing cost of the cables is reduced, the weight of the cables is reduced, the production process is simplified, the production period is shortened, and the production cost of the connector assembly is reduced. The conductive particles 31 are clamped between an inner surface and an outer surface of the insulating layer 3, at this time, the inner surface and the outer surface of the insulating layer 3 have an insulating effect, and the conductive layer formed by the conductive particles 31 has a shielding effect, so that a separate shielding net is not required to be arranged outside the insulating layer 3, which simplifies the production process, does not require to add more equipment, and improves the production efficiency.

In an embodiment of the connector assembly made of the novel shielding material of the present disclosure, a material of the connection terminal 5 includes copper or a copper alloy, a material of the electric connection skeleton 1 includes aluminium or an aluminium alloy, and the electric connection skeleton 1 is electrically connected to the connection terminal in a welded or crimped manner.

In the specific implementation, the copper or the copper alloy has high conductivity and is resistant to friction, and at present, a material of a power connection part of most of the electric devices is copper, so that the connection terminal 5 with the material including the copper or the copper alloy is required to be used for plug-in connection, and the connection terminal 5 can be widely applied to various electric transmission scenes. The electric connection skeleton 1 made of the aluminium or the aluminium alloy has the advantages of good rigidity, light weight and high transmission efficiency, and is particularly suitable for the transmission of large current.

Pure aluminium or an aluminium alloy containing more than 90% of aluminium is adopted to replace a copper conductor which is usually used in the relative art, because the density of the aluminium is only one third of the density of copper, and according to the difference of the resistivity of solid conductors with the electrical performance, on the premise of meeting the same electrical conductivity, the difference in wire diameter ratio of the aluminium to the copper is only 1.28 times, and the weight of an aluminium material is only a half of that of a copper material with the same current-carrying capacity, and under the condition of not increasing the space for cable installation in the vehicle, the weight of the wire can be greatly reduced, which is beneficial to realizing the light weight of a vehicle body. In addition, an aluminium conductor (including an aluminium core or an alloy material thereof) with small specific gravity and low material price is adopted to replace a copper conductor with large specific gravity and high material price, so that the material cost and the transportation cost can be reduced, and the production cost of a motor vehicle is reduced. Exemplarily, the aluminium alloy is an aluminum-copper alloy, an aluminium-magnesium alloy, an aluminiumlithium alloy, an aluminium-manganese alloy, an aluminium-zinc alloy, or an aluminiumsilicon alloy containing more than 90% of aluminium.

The electric connection skeleton 1 is connected to the connection terminal 5 through welding, the adopted welding method includes one or more of resistance welding, friction welding, ultrasonic welding, arc welding, laser welding, electron beam welding, pressure diffusion welding and magnetic induction welding, and concentrated heat energy or pressure is adopted to ensure that the contact position of the connection terminal 5 and the electric connection skeleton 1 generates a fusion connection, so that the welding method is stable in connection, and the connection of dissimilar materials can be realized, and a conductive effect is better due to the fusion of the contact positions.

The resistance welding method refers to a method of welding by using a strong current through a contact point between an electrode and a workpiece and generating heat from a contact resistance.

The friction welding method refers to a method of welding by using the heat generated by the friction of a workpiece contact surface as a heat source to make the workpiece produce plastic deformation under the action of pressure.

The ultrasonic welding method is to form a fusion between molecular layers due to mutual friction between the surfaces of two objects under pressure by transferring high-frequency vibration waves to the surfaces of the two objects to be welded.

The arc welding method refers to converting electric energy into heat energy and mechanical energy required for welding with an electric arc as a heat source by utilizing a physical phenomenon of air discharge to achieve the purpose of connecting metals. The main methods include shielded metal arc welding, submerged arc welding, gas shielded welding, etc.

The laser welding method is an efficient and precise welding method which utilizes high energy density laser beams as a heat source.

The friction welding method refers to a method of welding by using heat generated by the friction of the contact surface of a workpiece as a heat source to make the workpiece produce plastic deformation under the action of pressure.

The electron beam welding method is to bombard a welding surface in vacuum or non-vacuum by using accelerated and focused electron beams to melt a welded workpiece to achieve welding.

The pressure welding method refers to a method of applying pressure to a weldment to make joint surfaces closely contact to produce certain plastic deformation to complete welding.

The magnetic induction welding method is that two welded workpieces collide instantaneously at a high speed under the action of a strong pulse magnetic field, and atoms of the two materials meet within the distance between the atoms under the action of a high pressure wave on the surface of the material, thus forming a stable metallurgical bond on an interface. This method is a solid-state cold welding method that can weld conductive metals of similar or dissimilar properties together.

The crimping method is a production process in which the electric connection skeleton 1 and the connection terminal 5 are assembled and then stamped into a whole by using a crimping machine. The crimping has the advantage of mass production, and through the adoption of an automatic crimping machine, a large number of stable-quality products can be quickly produced.

In an embodiment of the connector assembly made of the novel shielding material of the present disclosure, the electric connection skeleton is a rigid body, and the tensile strength of the electric connection skeleton is greater than 75 MPa.

At present, most of charging cables on the connector assembly use multi-core copper cables, which are heavy in weight and expensive in price, becoming an obstacle to the popularization of the new energy vehicles. In addition, although the multi-core cables are soft and can be convenient for processing and wiring, due to its thick wire diameter and heavy weight, the cables will frequently rub against a vehicle shell in the process of vehicle driving, resulting in damage to the insulating layers of the cables to cause high-voltage discharge, which can damage the vehicle or cause serious traffic accidents. Therefore, the cable form of the electric connection skeleton 1 of the rigid body is used to replace a multi-core cable structure, so that the cables can be fixed on the vehicle shell and cannot be rubbed with the vehicle shell along with the vibration of the vehicle, the service life of the connector is prolonged, and the accident rate is reduced. The electric connection skeleton 1 can be a single-core copper rod, an aluminium rod or an aluminium flat strip.

The rigid body is an object whose shape and size do not change in motion and under force, and the relative position of the internal points does not change. In fact, the absolute rigid body does not exist, but is an ideal model, because any object is more or less deformed after being subjected to force. If the degree of deformation is extremely small relative to the geometric size of the object itself, the deformation is negligible in the study of the motion of the object. Therefore, the deformation of the electric connection skeleton 1 made of the rigid body material in the using process is negligible, and the greater the tensile strength of the rigid body is, the smaller the deformation is.

In order to verify the influence on the tensile force value when the electric connection skeleton 1 is pulled apart, the influence on the bending torque and the influence on whether abnormal sound occurs in the vibration process of the tensile strength of the electric connection skeleton 1, the inventor selects samples of the electric connection skeleton 1 with the same size and specification and different tensile strengths to test the tensile force value when the electric connection skeleton 1 is pulled apart, the bending torque and the abnormal sound in the vibration process.

The test method for the tensile force value of the electric connection skeleton 1 includes: using a universal tensile tester to fix the two ends of the electric connection skeleton 1 on a tensile fixture of the universal tensile tester respectively, stretching the electric connection skeleton at a speed of 50 mm/min, and recording the tensile force value when the electric connection skeleton is finally pulled apart. In this embodiment, the tensile force value greater than 1600 N is the qualified value.

A torque test method of the electric connection skeleton 1 includes: using a torque tester to test the torque value of the deformation of the electric connection skeleton 1 in the bending process when the electric connection skeleton 1 is bent by 90 degrees at the same radius and the same speed. In this embodiment, the torque value less than 60 N • m is the preferred value.

The test method includes: selecting samples of the electric connection skeletons 1 with the same dimension and specification and different tensile strengths, assembling the connectors 2 with the same specification together, fixing them on a vibration test bed, and observing whether the electric connection skeleton 1 has abnormal sound in the process of vibration test.

**Table 1: Influence of different tensile strengths on the tensile force value, torque value and abnormal sound of the electric connection skeleton 1**

| Different tensile strengths (MPa) | | | | | | | | | | | |
|---|---|---|---|---|---|---|---|---|---|---|---|
| 60 | 70 | 75 | 80 | 120 | 200 | 280 | 330 | 380 | 430 | 480 | 500 |

| Tensile force value when the electric connection skeleton 1 is pulled apart (N) | | | | | | | | | | | |
|---|---|---|---|---|---|---|---|---|---|---|---|
| 1422 | 1610 | 1688 | 1709 | 1759 | 1815 | 1856 | 1909 | 1950 | 1989 | 2040 | 2067 |

| Torque value of bending in a horizontal direction (N • m) | | | | | | | | | | | |
|---|---|---|---|---|---|---|---|---|---|---|---|
| 6 | 8 | 9 | 18 | 27 | 34 | 44 | 46 | 49 | 52 | 59 | 70 |

| Whether the electric connection skeleton 1 has abnormal sound | | | | | | | | | | | |
|---|---|---|---|---|---|---|---|---|---|---|---|
| Yes | Yes | No | No | No | No | No | No | No | No | No | No |

It can be seen from the above Table 1 that when the tensile strength of the electric connection skeleton 1 is less than 75 MPa, the tensile force value when the electric connection skeleton 1 is pulled apart is less than 1600 N. At this time, the strength of the electric connection skeleton 1 itself is not high, and the electric connection skeleton is easy to be pulled apart when being subjected to a small external force, resulting in the function failure of the electric connection skeleton 1, thus failing to achieve the purpose of electric energy transmission.

On the other hand, as the tensile strength value of the electric connection skeleton 1 is larger, the electric connection skeleton 1 is more difficult to deform, so that in the process of vibration test, the electric connection skeleton 1 is more difficult to vibrate relative to the connectors 2 connected to two ends to generate abnormal sound. On the contrary, the tensile strength value of the electric connection skeleton 1 is smaller, the electric connection skeleton 1 is easier to deform, so that in the process of vibration test, the electric connection frame 1 is easier to vibrate relative to the connectors 2 connected to the two ends to generate abnormal sound. It can be seen from the above Table 1 that when the tensile strength of the electric connection skeleton 1 is less than or equal to 75 MPa, the electric connection skeleton 1 may generate abnormal sound in the process of vibration test. Accordingly, the inventor exemplarily selects that the tensile strength of the electric connection skeleton 1 is greater than 75 MPa.

Meanwhile, it can also be seen from Table 1 that when the tensile strength of the electric connection skeleton 1 is greater than 480 MPa, the torque value when the electric connection skeleton 1 is bent by 90 degrees is greater than 60 N • m, and at this time, the electric connection skeleton 1 is difficult to bend. Therefore, the inventor further exemplarily selects that the tensile strength of the electric connection skeleton 1 is greater than 75 MPa and less than or equal to 480 MPa.

In an embodiment of the connector assembly made of the novel shielding material of the present disclosure, at least part of the electric connection skeleton 1 includes a flexible body, and the flexible body is a multi-core cable or a braided cable or a flexible flat cable formed by stacking multiple thin plates.

In the specific implementation, the flexible body location in the electric connection skeleton 1 can also be set to be a multi-core cable or a braided cable or a flexible flat cable formed by stacking multiple thin plates, so that the wiring can be conveniently conducted when the flexible body part is installed on a vehicle body, and at this time, the electric connection skeleton 1 has excellent bendability and is convenient to install and store.

In an embodiment of the connector assembly made of the novel shielding material of the present disclosure, a material of the insulating layer 3 includes one or more of tetraphenylethylene, polyvinyl chloride, polyethylene, polyamide, polytetrafluoroethylene, a hexafluoropropene-tetrafluoroethylene copolymer, an ethylene-terafluoroethlene copolymer, polypropylene, polyvinylidene fluoride, polyurethane, poly(terephthalic acid)(i.e. polyethylene terephthalate), a polyurethane elastomer, a styrene block copolymer, perfluoroalkoxy alkane, chlorinated polyethylene, polyphenylene sulfide, polystyrene, crosslinked polyolefin, ethylene propylene rubber, an ethylene-vinyl acetate copolymer, chloroprene rubber, nature rubber, styrene butadiene rubber, nitrile butadiene rubber, silicone rubber, butadiene rubber, polyisoprene rubber, ethylene-propylene rubber, butyl rubber, fluororubber, polyurethane rubber, polyacrylate rubber, chlorosulfonated polyethylene rubber, epichlorohydrin rubber, chlorinated polyethylene rubber, chlorosulfurized rubber, styrene-butadiene rubber, butadiene rubber, hydrogenated nitrile rubber, polysulfide rubber, crosslinked polyethylene, polycarbonate, polysulfone, polyphenyl ether, polyester, phenolic resin, urea formaldehyde, a styrene-acrylonitrile copolymer, polymethacrylate and polyoxymethylene resin.

The properties of the material are illustrated with examples below.

Polyoxymethylene is a hard and dense material with a smooth and glossy surface, which is light yellow or white, and can be used for a long time in the temperature range of -40°C to -100°C. Its wear resistance and self-lubricity are superior to most engineering plastics, and it has good oil resistance and peroxide resistance.

Polycarbonate is colorless and transparent, heat-resistant, impact-resistant, and flame-retardant (BI-level), and has good mechanical performance within the ordinary use temperature. Compared with polymethyl methacrylate with similar performance, polycarbonate has good impact resistance, high refractive index, good processability, and high flame retardancy without additives.

Polyamide, which is non-toxic, and light in weight, and has excellent mechanical strength, good wear resistance and corrosion resistance, can replace copper and other metals to be applied in machinery, chemical industry, instrumentation, automotive and other industries to make bearings, gears, pump blades and other parts.

In an embodiment of the connector assembly made of the novel shielding material of the present disclosure, a material of each of the conductive particles 31 includes one or more of a metal, a conductive ceramic, a carbon-containing conductor, a solid electrolyte and a mixed conductor.

In the specific implementation, the conductive particles 31 are mixed into a high polymer material to form a conductive plastic, and the insulating layer 3 is integrally formed on both sides of the conductive plastic. The conductive plastic has the electrical conductivity, so that the insulating layer has a shielding effect, namely has a shielding function, and has the greatest advantages of low cost, simplicity, practicability and wide application range; and the conductive particles are included in the insulating layer, so that the insulating layer has a shielding effect to replace a braided shielding net, reduce the use of equipment for braiding the shielding net, the occupied area is small, the processing cost of the cables is reduced, the weight of the cables is reduced, the production process is simplified, the production period is shortened, and the production cost of the connector assembly is reduced.

Further, a material of the metal includes one or more of gold, silver, copper, nickel, titanium, tin, aluminium, cadmium, zirconium, chromium, cobalt, manganese, zinc, phosphorus, tellurium, beryllium, a tin-lead alloy, a silver-antimony alloy, palladium, a palladium-nickel alloy, or a silver-gold-zirconium alloy.

In order to demonstrate the influence of different metal materials on the conductivity of the conductive particles 31 in the insulating layer 3, the inventor adopts the insulating layer 3 with the conductive particles 31 to carry out an experiment, uses the conductive particles 31 with the same specification and dimension but different materials to make samples of the insulating layer 3, and tests the conductivity respectively. The experimental results are shown in Table 2 below. In this embodiment, the conductivity of the conductive plastic is greater than 99%, which is an ideal value.

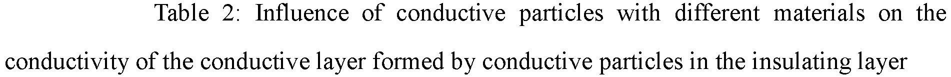

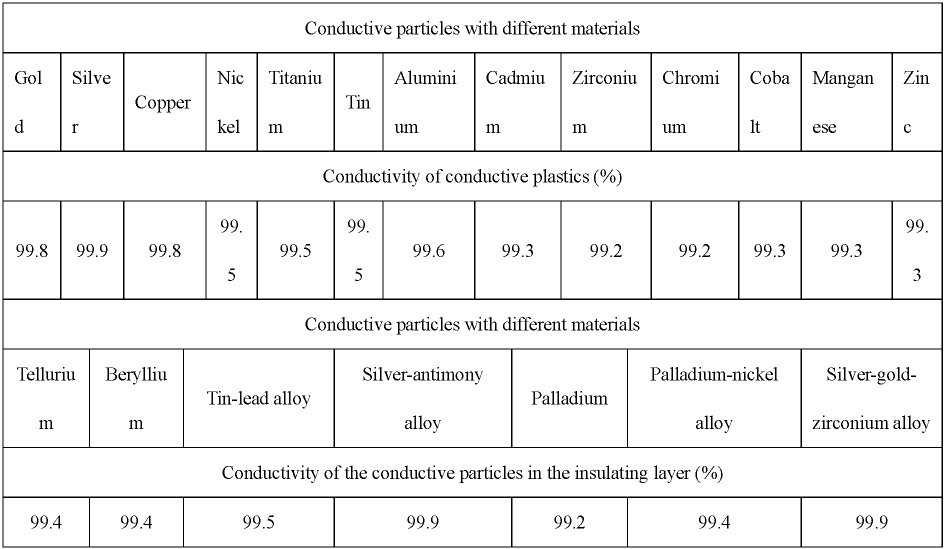

It can be seen from above Table 2 that the conductivity of the insulating layers 3 made of different conductive particles is within the range of the ideal value. In addition, phosphorus is a non-metallic material and cannot be directly used as the material of the conductive layer, but it can be added to other metals to form an alloy to improve the conductivity and mechanical performance of the metal itself. Therefore, the inventor sets that the material of each of the conductive particles includes one or more of gold, silver, copper, nickel, titanium, tin, aluminium, cadmium, zirconium, chromium, cobalt, manganese, zinc, a tin-lead alloy, a silver-antimony alloy, palladium, a palladium-nickel alloy, and a silver-gold-zirconium alloy.

Further, the carbon-containing conductor includes one or more of graphite powder, a carbon nanotube material, a graphene material, graphite silver or graphene silver.

The graphite powder is a mineral powder, the main component of which is carbon, the graphite powder is soft, and black and gray. The graphite powder is a good non-metallic conductive material. The carbon nanotubes have good electrical conductivity, and because the structures of the carbon nanotubes are the same as the lamellar structure of graphite, the carbon nanotubes have good electrical performance. The graphene has extremely high electrical performance, and the carbon-containing conductor including the five materials has high conductivity and good shielding performance, and can well realize the electromagnetic shielding of the electric connection skeleton 1.

In an embodiment of the connector assembly made of the novel shielding material of the present disclosure, the ratio of the conductive particles 31 in the insulating layer 3 is less than 3.5% to 95%.

If the ratio of the volume of the conductive particles 31 to the volume of the insulating layer 3 is too small, the conductivity is insufficient, resulting in that the ideal shielding effect cannot be achieved. Therefore, the inventor tests the insulating layers with different volume ratios of the conductive particles, and if the conductivity of the conductive particles is less than 99%, it is unqualified, and the test results are shown in Table 3.

**Table 3: Influence of the volume ratios of different conductive particles on the conductivity of the conductive particles in the insulating layer**

| Volume ratios of different conductive particles (%) | | | | | | | | | | | | |
|---|---|---|---|---|---|---|---|---|---|---|---|---|
| 3.2 | 3.5 | 10 | 20 | 30 | 40 | 50 | 60 | 75 | 85 | 90 | 95 | 97 |

| Conductivity of the conductive particles in the insulating layer (%) | | | | | | | | | | | | |
|---|---|---|---|---|---|---|---|---|---|---|---|---|
| 98.9 | 99. 0 | 99.1 | 99.1 | 99.2 | 99.2 | 99.3 | 99.3 | 99.4 | 99.5 | 99.5 | 99.6 | 99.6 |

It can be seen from Table 3 that when the ratio of the conductive particles in the insulating layer is less than 3.5%, the conductivity of the conductive particles 31 in the insulating layer 3 is less than 99%, which does not meet the requirement, while when the ratio of the conductive particles 31 in the insulating layer 3 is greater than 95%, the conductivity does not increase, and the required process becomes higher and higher. Therefore, the inventor exemplarily selects that the volume ratio of the conductive particles in the insulating layer 3 is 3.5% to 95%.

In an embodiment of the connector assembly made of the novel shielding material of the present disclosure, the maximum diameter of the conductive particles 31 accounts for 0.1% to 97% of the thickness of the insulating layer 3.

If the ratio of the maximum diameter of a single conductive particle 31 is too large, the conductive particle 31 is likely to pierce the insulating layer, so that the inner surface and the outer surface of the insulating layer do not have an insulating effect. Therefore, the inventor tests the insulating layers 3 produced by conductive particles 31 having different diameters.

The method for testing the insulating performance of the insulating layer 3 includes the following steps: applying different alternating current or direct current high voltages between the conductive particles 31 and the inner surface of the insulating layer 3, and between the conductive particles 31 and the outer surface of the insulating layer 3 by using a dielectric withstand voltage tester so as to check the withstand voltage capability of the insulating layer 3 outside the electric connection skeleton 1. If the breakdown voltage of the insulating layer 3 is less than 2.1 KV, it is unqualified, and the test results are shown in Table 4.

**Table 4: Influence of the ratio of the diameters of the conductive particles to the thickness of the insulating layer on the breakdown voltage of the insulating layer**

| Ratio of the diameters of the conductive particles to the thickness of the insulating layer 3 (%) | | | | | | | | | | | | |
|---|---|---|---|---|---|---|---|---|---|---|---|---|
| 0.05 | 0.1 | 5 | 20 | 30 | 40 | 50 | 60 | 70 | 80 | 90 | 97 | 98 |

| Breakdown voltage of the insulating layer (KV) | | | | | | | | | | | | |
|---|---|---|---|---|---|---|---|---|---|---|---|---|
| 3.6 | 3.6 | 3.4 | 3.2 | 3.0 | 2.9 | 2.9 | 2.7 | 2.4 | 2.3 | 2.3 | 2.2 | 1.6 |

It can be seen from Table 4 that when the ratio of the diameters of the conductive particles 31 to the thickness of the insulating layer 3 is less than 97%, the breakdown voltage of the insulating layer 3 is greater than 2.1 KV, which can meet the requirement, and when the ratio of the diameters of the conductive particles 31 to the thickness of the insulating layer 3 is greater than 97%, the breakdown voltage of the insulating layer 3 is less than 2.1 KV, which cannot meet the requirement. Therefore, the maximum diameter of the conductive particle 31 accounts for 97% of the thickness of the insulating lay 3. In addition, when the ratio of the diameter of the conductive particle to the thickness of the insulating layer 3 is less than 0.1%, the production difficulty increases accordingly, and the value of the breakdown voltage is also difficult to increase. Therefore, the inventor selects that the maximum diameters of the conductive particles 31 account for 0.1% to 97% of the thickness of the insulating layer 3.

In an embodiment of the connector assembly made of the novel shielding material of the present disclosure, the conductive particles 31 in the insulating layer 3 conduct electricity in the axial direction of the electric connection skeleton 1.

In the specific implementation, the conductive particles 31 in the insulating layer 3 conduct electricity in the axial direction of the electric connection skeleton 1, which can ensure that the electric connection skeleton 1 can shield the magnetic field generated by the current in the using process, and ensure that the conductive particles can play a shielding role, so as to avoid affecting the use of other electrical equipment.

In an embodiment of the connector assembly made of the novel shielding material of the present disclosure, the conductive particles 31 in the insulating layer 3 conduct electricity in the circumferential direction of the electric connection skeleton 1.

In the specific implementation, the conductive particles 31 in the insulating layer 3 conduct electricity in the circumferential direction of the electric connection skeleton 1, which can ensure that the conductive particles surround the electric connection skeleton 1 to form a closed ring, and can ensure that the conductive particles shield the magnetic field generated by the current in the using process of the electric connection skeleton 1.

In the specific implementation, the conductive particles 31 are continuously clamped between an inner surface and an outer surface of the insulating layer 3, and the conductive particles 31 are arranged between the inner surface and the outer surface of the insulating layer 3 in a cylindrical form, so that the magnetic field generated in the using process of the electric connection skeleton 1 sleeved with the insulating layer 3 can be completely shielded.

In an embodiment of the connector assembly made of the novel shielding material of the present disclosure, the transfer impedance of the conductive particles 31 in the insulating layer 3 in the axial direction of the electric connection skeleton 1 is less than 100 mQ.

The shielding effect of the insulating layer 3 is usually characterized by the transfer impedance of the conductive particles 31 in the insulating layer 3, and the smaller the transfer impedance is, the better the shielding effect is. The transfer impedance of the insulating layer 3 is defined as the ratio of the differential-mode voltage U induced by the shielding body per unit length to the current passing Is through the surface of the shielding body, that is:

Z_{T} = U/Is, so that it may be understood that the transfer impedance of the insulating layer 3 converts the current conducted by the conductive particles 31 into a differential-mode interference. The smaller the transfer impedance, the better, that is, the differential-mode interference conversion is reduced, so that the better shielding performance may be obtained.

In order to verify the influence of the conductive particles 31 with different transfer impedance values on the shielding effect, the inventor selects the electric connection skeleton 1, the connector 2 and the connection terminal 5 with the same specification, adopts the conductive particles 31 with different transfer impedance values to make a series of samples, and tests the shielding effect respectively. The experimental results are shown in Table 5 below. In this embodiment, the shielding performance value greater than 40 dB is an ideal value.

The method for testing that shielding performance value includes the following steps: outputting a signal value (the value is a test value 2) to the electric connection skeleton 1 by a testing instrument, and providing a detection device outside the insulating layer 3, the detection device detects a signal value (the value is a test value 1). Shielding performance value = Test value 2 - Test value 1.

**Table 5: Influence of the transfer impedance of the conductive particles in the insulating layer on the shielding performance**

| Testing parameter | Transfer impedance of the conductive particles in the insulating layer (mQ) | | | | | | | | | | |
|---|---|---|---|---|---|---|---|---|---|---|---|
| | 20 | 30 | 40 | 50 | 60 | 70 | 80 | 90 | 100 | 110 | 120 |
| Shielding performance value (dB) | 79 | 76 | 72 | 65 | 62 | 58 | 54 | 46 | 39 | 30 | 27 |

It can be seen from above Table 5 that when the transfer impedance of the conductive particles 31 in the insulating layer 3 is greater than 100 mQ, the shielding performance value of the insulating layer 3 is less than 40 dB, which does not meet the requirement of the ideal value, when the transfer impedance of the conductive particles 31 in the insulating layer 3 is less than 100 mQ, the shielding performance values of the insulating layers 3 all meet the requirement of the ideal value, and the trend is getting better and better. Therefore, the inventor sets the transfer impedance of the conductive particles 31 in the insulating layer 3 to be less than 100 mQ.

In an embodiment of the connector assembly made of the novel shielding material of the present disclosure, an inner surface and an outer surface of the insulating layer 3 have an insulation withstand voltage value of more than 2.1 KV relative to the conductive particles.

In the specific implementation, the working voltage of the electric connection skeleton 1 is generally between 500 V and 600 V, and the detection voltage for the insulating layer 3 is three times of the working voltage, so that the inventor selects the insulation withstand voltage value of the inner surface and the outer surface of the insulating layer 3 to be greater than 2.1 KV, which can effectively ensure that the insulating layer is not broken down by high voltage in the using process.

In an embodiment of the connector assembly made of the novel shielding material of the present disclosure, a material of the inner shell 4 includes conductive metal or a high polymer material including conductive particles.

Further, a material of each of the conductive particles includes one or more of a metal, a conductive ceramic, a carbon-containing conductor, a solid electrolyte and a mixed conductor; and a material of the high polymer material includes one or more of tetraphenylethylene, polyvinyl chloride, polyethylene, polyamide, polytetrafluoroethylene, a hexafluoropropene-tetrafluoroethylene copolymer, an ethylene-terafluoroethlene copolymer, polypropylene, polyvinylidene fluoride, polyurethane, poly(terephthalic acid), a polyurethane elastomer, a styrene block copolymer, perfluoroalkoxy alkane, chlorinated polyethylene, polyphenylene sulfide, polystyrene, crosslinked polyolefin, ethylene propylene rubber, an ethylene-vinyl acetate copolymer, chloroprene rubber, nature rubber, styrene butadiene rubber, nitrile butadiene rubber, silicone rubber, butadiene rubber, polyisoprene rubber, ethylene-propylene rubber, butyl rubber, fluororubber, polyurethane rubber, polyacrylate rubber, chlorosulfonated polyethylene rubber, epichlorohydrin rubber, chlorinated polyethylene rubber, chlorosulfurized rubber, styrene-butadiene rubber, butadiene rubber, hydrogenated nitrile rubber, polysulfide rubber, crosslinked polyethylene, polycarbonate, polysulfone, polyphenyl ether, polyester, phenolic resin, urea formaldehyde, a styrene-acrylonitrile copolymer, polymethacrylate and polyoxymethylene resin.

In the specific implementation, a high polymer material including different conductive particles can be selected as required.

Further, a material of the metal of each of the conductive particles includes one or more of gold, silver, copper, nickel, titanium, tin, aluminium, cadmium, zirconium, chromium, cobalt, manganese, zinc, phosphorus, tellurium, beryllium, a tin-lead alloy, a silver-antimony alloy, palladium, a palladium-nickel alloy, or a silver-gold-zirconium alloy.

In order to demonstrate the influence of different conductive particles on the conductivity of the inner shell 4, the inventor adopts the inner shell 4 to conduct an experiment, and uses conductive particles with the same specification and dimension but different materials to make samples of the inner shell 4, and tests the conductivity respectively. The experimental results are shown in Table 6 below. In this embodiment, the conductivity of the inner shell 4 is greater than 99%, which is an ideal value.

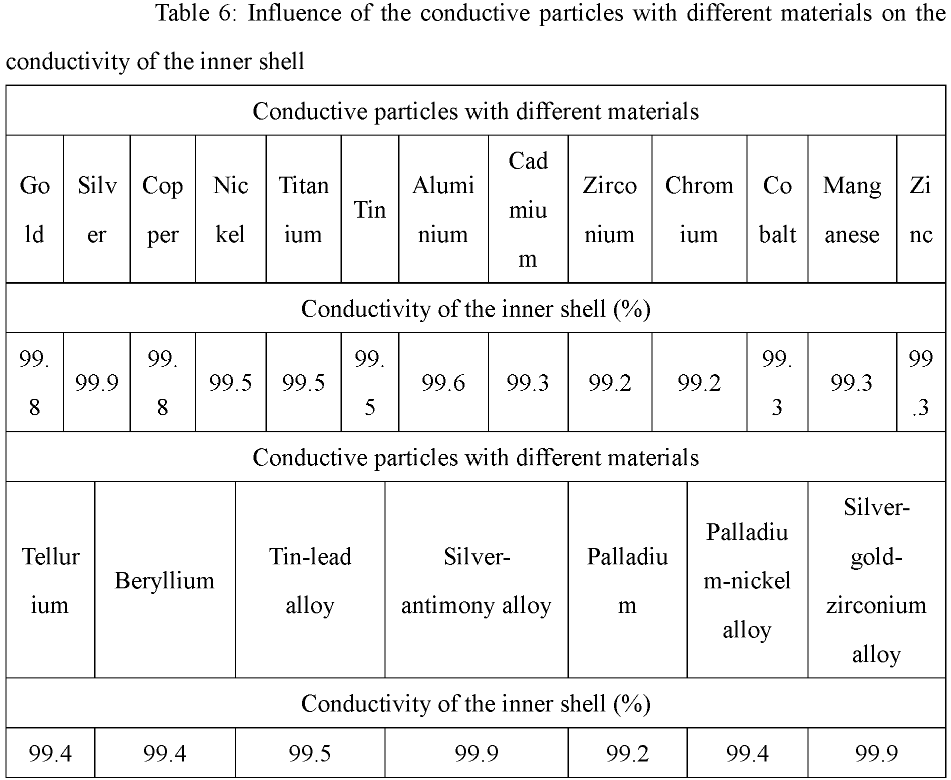

It can be seen from above Table 5 above that the conductivity of the inner shell 4 made of different conductive particles is within the range of the ideal value. In addition, phosphorus is a non-metallic material and cannot be directly used as the material of the inner shell, but it can be added to other metals to form an alloy to improve the conductivity and mechanical performance of the metal itself. Therefore, the inventor sets that a material of each of the conductive particles includes one or more of gold, silver, copper, nickel, titanium, tin, aluminium, cadmium, zirconium, chromium, cobalt, manganese, zinc, a tin-lead alloy, a silver-antimony alloy, palladium, a palladium-nickel alloy or a silver-gold-zirconium alloy.

Further, the carbon-containing conductor of each of the conductive particles includes one or more of graphite powder, a carbon nanotube material, a graphene material, graphite silver or graphene silver.

The graphite powder is a mineral powder, the main component of which is carbon, soft, and black and gray. The graphite powder is a good non-metallic conductive material. The carbon nanotubes have good electrical conductivity, and because the structures of the carbon nanotubes are the same as the lamellar structure of graphite, the carbon nanotubes have good electrical performance. The graphene has extremely high electrical performance, and the carbon-containing conductor including the five materials has high conductivity and good shielding performance, and can well realize the electromagnetic shielding of the connection terminal 5.

In an embodiment of the connector assembly made of the novel shielding material of the present disclosure, as shown in FIGs. 2 to 5, the inner shell 4 is electrically connected to the conductive particles.

In the specific implementation, by electrically connecting the inner shell 4 with the conductive layer formed by adding the conductive particles into the insulating layer 3, the electromagnetic interference generated in the using process of the electric connection skeleton 1 can be shielded, so as to prevent the normal use of other electronic equipment serving as a control system from being affected, and to avoid traffic accidents, property losses and casualties caused by the failure of the control system due to the electromagnetic interference.

In an embodiment of the novel connector assembly made of the shielding material of the present disclosure, as shown in FIGs. 2 to 3, at least part of the insulating layer 3 is provided with a recess 32 in the connector 2; the conductive particles 31 are exposed in the recess 32; and a corresponding position of the inner shell 4 is provided with a protrusion 21, and the protrusion 21 is connected to the recess 32 in a matching manner and is electrically connected to the conductive particles.

In the specific implementation, the inner shell 4 is generally installed inside a housing of the connector 2 and is integrally formed. In one embodiment, the inner shell 4 may be made of a conductive plastic material and is injection molded together with an outer shell of the connector 2. When the electric connection skeleton 1 is assembled with the connector 2, the inner shell 4 is connected to the conductive layer formed by adding the conductive particles into the insulating layer 3, and the inner shell 4 is electrically connected to the conductive layer formed by the conductive particles 31 through the protrusion 21 and the recess 32 by arranging the recess 32 on the insulating layer 3 and arranging the protrusion 21 at the corresponding position of the inner shell. Thus, the electromagnetic interference generated in the using process of the electric connection skeleton 1 is shielded.

In the specific implementation, the conductive layer formed by the conductive particles 31 in the recess 32 can also protrude to form a protrusion with the outer surface of the insulating layer 3, and the inner shell 4 is correspondingly provided with a groove, so that the conductive layer is electrically connected to the inner shell 4 through the electric connection between the groove and the protrusion, and the shielding effect of the electromagnetic interference generated in the using process of the electric connection skeleton 1 may also be achieved.

In order to make the contact between the inner shell 4 and the conductive layer more sufficient, to make the shielding function of the connector 2 more complete, and the shielding effect better. The recess or the protrusion in which the conductive particles are exposed is formed in the insulating layer 3, and can be an annular groove or an annular protrusion, so that the electric connection between the conductive layer and the inner shellis more stable and sufficient.

In an embodiment of the connector assembly made of the novel shielding material of the present disclosure, the impedance between the conductive particles 31 and the inner shell 4 is less than 80 mQ.

In order to verify the influence of the impedance value between the conductive layer formed by the conductive particles 31 and the inner shell 4 on the shielding effect, the inventor selects the electric connection skeleton 1, the connector 2, the inner shell 4 and the connection terminal 5 with the same specification, selects different impedances between the conductive particles 31 and the inner shell 4 to make a series of samples, and tests the shielding effect respectively. The experimental results are shown in Table 7 below. In this embodiment, the shielding performance value greater than 40 dB is an ideal value.

The method for testing that shielding performance value includes the following steps: outputting a signal value (the value is a test value 2) to the electric connection skeleton 1 by a testing instrument, and providing a detection device outside the inner shell 4, where the detection device detects a signal value (the value is a test value 1). Shielding performance value = Test value 2 - Test value 1.

**Table 7: Influence of the impedance between the conductive particles and the inner shell on the shielding performance**

| Testing parameter | Impedance between the conductive layer 12 and the shielding connection device 6 (mQ) | | | | | | | | | | |
|---|---|---|---|---|---|---|---|---|---|---|---|
| | 5 | 10 | 20 | 30 | 40 | 50 | 60 | 70 | 80 | 90 | 100 |
| Shielding performance value (dB) | 75 | 72 | 69 | 64 | 61 | 58 | 51 | 45 | 42 | 35 | 28 |

It can be seen from Table 7 that when the impedance value between the conductive particles 31 and the inner shell 4 is greater than 80 mQ, the shielding performance value is less than 40 dB, which does not meet the requirement of the ideal value, when the impedance value between the conductive particles 31 and the inner shell 4 is less than 80 mQ, the shielding performance values all meet the requirement of the ideal value, and the trend is getting better and better. Therefore, the inventor sets the impedance between the conductive particles 31 and the inner shell 4 to be less than 80 mQ.

In an embodiment of the connector assembly made of the novel shielding material of the present disclosure, the transfer impedance of the inner shell 4 is less than 100 mQ.

In order to verify the influence of the inner shell 4 with different transfer impedance values on the shielding effect, the inventor selects the electric connection skeleton 1, the connector 2 and the connection terminal 5 with the same specification, adopts the inner shell 4 with different transfer impedance values to make a series of samples, and tests the shielding effect respectively. The experimental results are shown in Table 8 below. In this embodiment, the shielding performance value greater than 40 dB is an ideal value.

The method for testing that shielding performance value includes the following steps: outputting a signal value (the value is a test value 2) to the electric connection skeleton 1 by a testing instrument, and providing a detection device outside the inner shell 4, where the detection device detects a signal value (the value is a test value 1). Shielding performance value = Test value 2 - Test value 1.

**Table 8: Influence of the transfer impedance of the inner shell 4 on the shielding performance**

| Testing parameter | Transfer impedance of the inner shell 4 (mΩ) | | | | | | | | | | |
|---|---|---|---|---|---|---|---|---|---|---|---|
| | 20 | 30 | 40 | 50 | 60 | 70 | 80 | 90 | 100 | 110 | 120 |
| Shielding performance value (dB) | 79 | 76 | 72 | 65 | 63 | 59 | 54 | 45 | 42 | 30 | 27 |

It can be seen from the above Table 7 that when the transfer impedance value of the inner shell 4 is greater than 100 mQ, the shielding performance value of the inner shell 4 is less than 40 dB, which does not meet the requirement of the ideal value, when the transfer impedance value of the inner shell 4 is less than 100 mQ, the shielding performance values of the inner shells 4 all meet the requirement of the ideal value, and the trend is getting better and better. Therefore, the inventor sets the transfer impedance of the inner shell 4 to be less than 100 mQ.

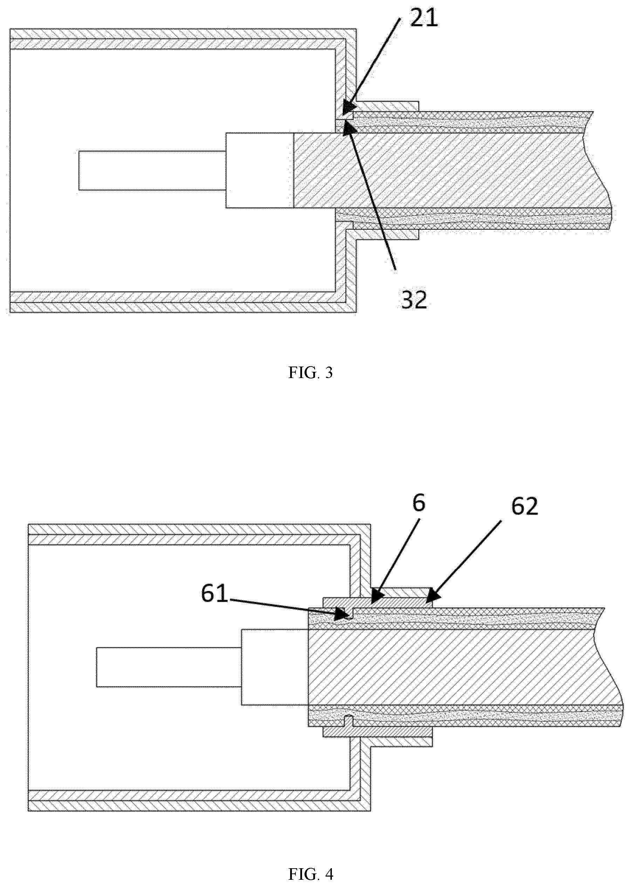

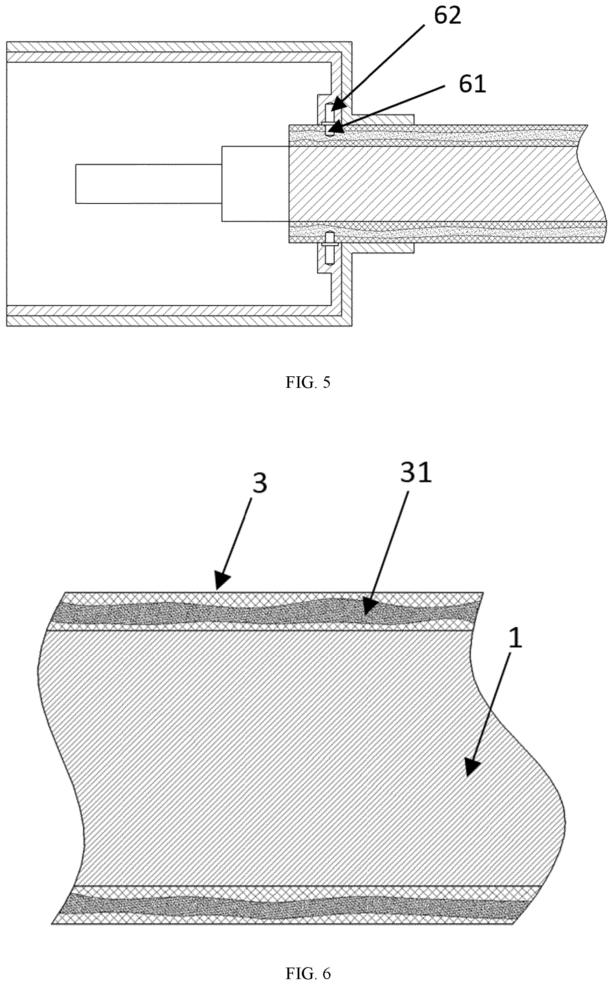

In an embodiment of the novel connector assembly made of the shielding material of the present disclosure, as shown in FIGs. 4 and 5, the connector 2 further includes a shielding connection device 6, the shielding connection device 6 has at least one insertion portion 61 and a contact portion 62, the insertion portion 61 is inserted along an outer circumferential surface of the insulating layer 3 and electrically connected to the conductive particles 31, and the contact portion 62 is electrically connected to the inner shell 4.

In the specific implementation, the shielding connection device 6 is installed between the inner shell 4 and the conductive layer formed by the conductive particles in the insulating layer 3, and is used for electrically connecting the conductive layer with the inner shell 4, so as to shield the electromagnetic interference generated by the electric connection skeleton 1 and the connection terminal 5 in the electrification process. The conductive layer and the inner shell 4 can be electrically connected more firmly through the shielding connection device 6, so that a more stable shielding effect is achieved between the conductive layer and the inner shell 4. The shielding function of the connector 2 is more complete and the shielding effect is better, and meanwhile, the assembly difficulty between the inner shell 4 and the electric connection skeleton 1 is reduced by the arrangement of the shielding connection device 6.

Further, the vertical length of the insertion portion 61 along the radial direction of the electric connection skeleton 1 is smaller than the thickness of the insulating layer 3.

In the specific implementation, the insertion portion 61 is inserted into the insulating layer 3 to be electrically connected to the conductive particles 31 without piercing the insulating layer 3.

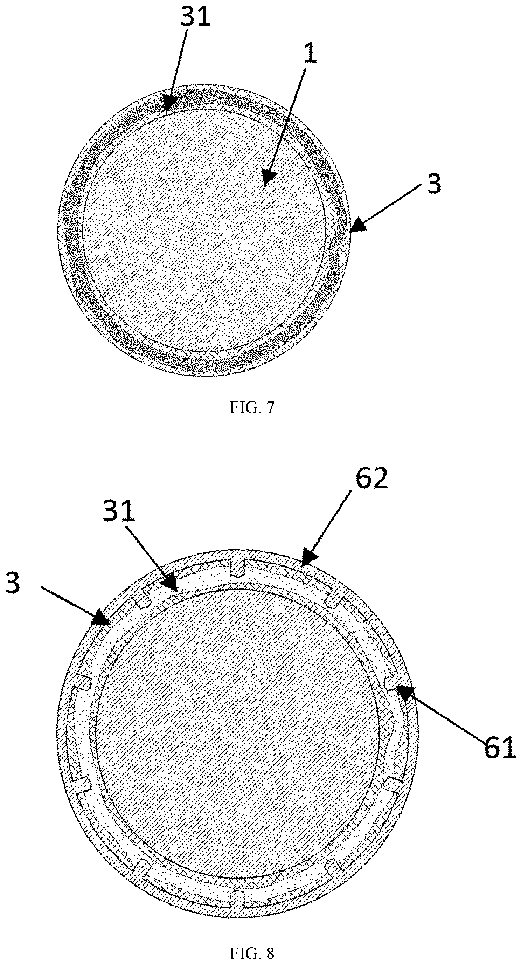

Further, as shown in FIGs. 4 and 8, the contact portion 62 is cylindrical, the cylindrical contact portion is internally provided with at least one insertion portion 61, and the outer wall of the cylindrical contact portion 62 is electrically connected to the inner surface of the inner shell 4.

In the specific implementation, the contact portion 62 is a cylindrical conductive elastic sheet, and the conductive elastic sheet is electrically connected to the inner shell 4 and applies an elastic force to the inner shell 4, so as to ensure that the inner shell 4 is more tightly connected to the contact portion 62 and prevent the inner shell 4 from falling off, which makes the shielding function of the connector 2 more complete and the shielding effect better.

Further, as shown in FIG. 5, the contact portion 62 is columnar, and the contact portion 62 is inserted into the inner shell 4 and electrically connected to the inner shell 4.

In the specific implementation, a recess can be correspondingly arranged inside the inner shell 4, and the recess of the inner shell 4 is connected to the columnar contact portion 62, so as to ensure that the shielding connection device 6 is more tightly connected to the inner shell 4, so that the shielding function between the inner shell 4 and the shielding connection device 6 is more complete, and the shielding effect is better.

Further, the contact portion 62 is an elastic sheet, and at least part of the outer surface of the elastic sheet is electrically connected to the inner surface of the inner shell 4.

In a specific implementation, the contact portion 62 is a conductive elastic sheet, at least part of the conductive elastic sheet is elastic, and the conductive elastic sheet is electrically connected to the inner shell 4, so as to form a complete shielding structure. One end of the conductive elastic sheet is fixed to and electrically connected to the insertion portion 61, the insertion portion 61 is electrically connected to the conductive layer formed by the conductive particles 31, and the other end is in contact with and electrically connected to the inner shell 4. The two ends of the contact portion 62 may also have an insertion portion 61 connected and embedded in the conductive layer and a conductive elastic sheet protruding in the middle of the contact portion 62, the protruding position in the middle of the contact portion 62 is electrically connected to the inner shell 4, and the outer diameter of the protruding position of the conductive elastic sheet is larger than the inner diameter of the connection position of the inner shell 4, so that after the connector 2 is assembled, the conductive elastic sheet is tightly connected to the inner shell 4 by means of elastic force.

Further, the impedance between the shielding connection device 6 and the conductive particles 31 is less than 80 mQ, and the impedance between the shielding connection device 6 and the inner shell 4 is less than 80 mQ.

In order to verify the influence of the impedance value between the shielding connection device 6 and the conductive particles 31 on the shielding effect, the inventor selects the electric connection skeleton 1, the connector 2, the inner shell 4 and the connection terminal 5 with the same specification, selects different impedances between the shielding connection device 6 and the conductive particles 31 to make a series of samples, and tests the shielding effect respectively. The experimental results are shown in the following Table 9. In this embodiment, the shielding performance value is greater than 40 dB, which is an ideal value.

The method for testing that shielding performance value includes the following steps: outputting a signal value (the value is a test value 2) to the electric connection skeleton 1 by a testing instrument, and providing a detection device outside the shielding connection device 6, where the detection device detects a signal value (the value is a test value 1). Shielding performance value = Test value 2 - Test value 1.

**Table 9: Influence of the impedance between the shielding connection device and the conductive particles on the shielding performance**

| Testing parameter | Impedance between the shielding connection device and the conductive particles (mΩ) | | | | | | | | | | |
|---|---|---|---|---|---|---|---|---|---|---|---|
| | 5 | 10 | 20 | 30 | 40 | 50 | 60 | 70 | 80 | 90 | 100 |
| Shielding performance value (dB) | 75 | 74 | 69 | 65 | 61 | 57 | 51 | 46 | 43 | 35 | 28 |

As can be seen from the table, when the impedance value between the shielding connection device 6 and the conductive particles 31 is greater than 80 mΩ, the shielding performance value is less than 40 dB, which does not meet the requirement of the ideal value, when the impedance value between the shielding connection device 6 and the conductive particles 31 is less than 80 mΩ, the shielding performance values all meet the requirement of the ideal value, and the trend is getting better and better. The inventor sets the impedance between the shielding connection device 6 and the conductive particles 31 to be less than 80 mΩ.

In a similar way, the inventor sets the impedance between the shielding connection device 6 and the inner shell 4 to be less than 80 mΩ.

In an embodiment of the connector assembly made of the novel shielding material of the present disclosure, the thickness of the insulating layer 3 is 0.1mm to 3.8 mm.

As shown in FIG. 6, which is an axial cross-sectional view of the electric connection skeleton 1 coated with the insulating layer 3, and as shown in FIG. 7, which is a radial cross-sectional view of the electric connection skeleton 1 coated with the insulating layer 3, the smaller the thickness of the insulating layer 3 is, the lower the breakdown voltage that the insulating layer 3 can withstand, and conversely, the thicker the thickness of the insulating layer 3 is, the higher the breakdown voltage that the insulating layer 3 can withstand. The insulating layer 3 does not have an insulating effect after being subjected to breakdown, so that the inventor tests different thicknesses of the insulating layers 3.

The method for testing the insulating performance of the insulating layer 3 includes the following steps: applying different alternating current or direct current high voltages between the electric connection skeleton 1 and the insulating layer 3 by using a dielectric withstand voltage tester so as to check the withstand voltage capability of the insulating layer 3 outside the electric connection skeleton 1. If the breakdown voltage of the insulating layer 3 is less than 2.1 KV, it is unqualified, and the test results are shown in Table 10.

**Table 10: Influence of the thickness of the insulating layer on the breakdown voltage of the insulating layer**

| Thickness of the insulating layer (mm) | | | | | | | | | | | | |
|---|---|---|---|---|---|---|---|---|---|---|---|---|
| 0.08 | 0.09 | 0.1 | 0.8 | 1.0 | 1.2 | 1.5 | 1.7 | 2.0 | 2.4 | 2.8 | 3.8 | 3.9 |

| Breakdown voltage of the insulating layer (KV) | | | | | | | | | | | | |
|---|---|---|---|---|---|---|---|---|---|---|---|---|
| 1.7 | 1.9 | 2.1 | 2.3 | 2.5 | 2.5 | 2.7 | 2.8 | 3.0 | 3.3 | 3.4 | 3.5 | 3.5 |

It can be seen from Table 10 that when the thickness of the insulating layer 3 is less than 0.1 mm, the breakdown voltage of the insulating layer 3 is less than 2.1 KV, which cannot meet the requirement, and when the thickness ratio of the insulating layer 3 is greater than 3.8 mm, the growth trend of the breakdown voltage of the insulating layer tends to stabilize, and at the same time, as the thickness of the insulating layer 3 increases, the cost of raw materials increases, and similarly, as the thickness of the insulating layer 3 increases, the wire diameter may be increased, which may make the cables not easy to bend. At this time, it is of no practical significance to increase the thickness of the insulating layer 3. Therefore, the inventor sets the thickness of the insulating layer to 0.1mm to 3.8 mm.

In an embodiment of the connector assembly made of the novel shielding material of the present disclosure, a cross section of the electric connection skeleton 1 is in one or more of the following shapes: a round shape, an oval shape, a rectangular shape, a polygonal shape, an A shape, a B shape, a D shape, an M shape, an N shape, an O shape, an S shape, an E shape, an F shape, an H shape, a K shape, an L shape, a T shape, a U shape, a V shape, a W shape, an X shape, a Y shape, a Z shape, a P shape, a semi-arc shape, an arc shape and a wavy shape.

In the specific implementation, the shape of the cross section of the electric connection skeleton 1 can be specifically designed according to the wiring space in the vehicle so as to facilitate the wiring in the vehicle and the assembly of the vehicle by an operator.

In an embodiment of the novel connector assembly made of the shielding material of the present disclosure, the cross section of the electrical connection skeleton 1 is in a polygonal shape, and the corners of the polygon are all chamfered or rounded.

In the specific implementation, the corners of the electric connection skeleton 1 with the polygonal section are all chamfered or rounded, which can facilitate the connection between the electric connection skeleton 1 and the connection terminal, so that when the electric connection skeleton 1 and the connection terminal are connected more firmly through welding or crimping, the contact area is larger, and the conduction current is better. The corners of the electric connection skeleton 1 with the polygonal section are all chamfered or rounded can prevent the contact area being too small when the electric connection skeleton 1 and the connection terminal are connected, which causes the resistance to betoo high, and causes heating and even burning accidents; and in the using process, an edge formed by two adjacent sides of a polygon can be prevented from piercing an insulating layer to cause casualties and property losses.

In an embodiment of the connector assembly made of the novel shielding material of the present disclosure, the cross-sectional area of the electric connection skeleton is 3.5 to 240 mm².

The cross-sectional area of the electric connection skeleton 1 determines the current that the electric connection skeleton 1 is capable of conducting. In general, the electric connection skeleton 1 that realizes signal conduction has a smaller current and the electric connection skeleton 1 also has a smaller cross-sectional area, for example, the minimum cross-sectional area of the electric connection skeleton 1 for signal transmission can reach 3.5 mm², while the electric connection skeleton 1 that realizes power supply conduction has a larger current and the electric connection skeleton 1 also has a larger cross-sectional area, for example, in a vehicle battery harness, the maximum cross-sectional area of the electric connection skeleton 1 reaches 240 mm².

In an embodiment of the connector assembly made of the novel shielding material of the present disclosure, the electric connection skeleton includes at least one bending portion.

In the specific implementation, the bending portion can be arranged on the electric connection skeleton 1 as required to meet the requirement that the bending portion is arranged at a position where the direction of the electric connection skeleton 1 needs to be changed in a wiring process on the vehicle, thereby facilitating the wiring of operators, reducing the processing time of the vehicle, reducing the production cost of the vehicle and increasing the market competitiveness.

A vehicle of the present disclosure includes the above connector assembly made of the novel shielding material.

Although some specific embodiments of the present disclosure have been described in detail by way of examples, those skilled in the art should understand that the foregoing examples are illustrative only and are not intended to limit the scope of the present disclosure. It should be understood by those skilled in the art that the above embodiments may be modified without departing from the scope and spirit of the present disclosure.

## Claims

1. A connector assembly made of a novel shielding material, comprising an electric connection skeleton and connectors connected to two ends of the electric connection skeleton, wherein each of the connectors comprises a connection terminal and an inner shell with shielding effectiveness, the two ends of the electric connection skeleton are electrically connected to connection terminals, respectively, an outer periphery of the electric connection skeleton is coated with an insulating layer, the insulating layer comprises conductive particles in a radial direction, and the conductive particles are distributed with at least one location of non-uniform densitywithin the insulating layer.

2. The connector assembly made of a novel shielding material according to claim 1, wherein a material the connection terminal comprises copper or a copper alloy, a material of the electric connection skeleton comprises aluminium or an aluminium alloy, and the electric connection skeleton is electrically connected to the connection terminal in a welded or crimped manner.

3. The connector assembly made of a novel shielding material according to claim 1, wherein the electric connection skeleton is a rigid body, and the tensile strength of the electric connection skeleton is higher than 75 MPa.

4. The connector assembly made of a novel shielding material according to claim 1, wherein at least part of the electric connection skeleton comprises a flexible body, and the flexible body is a multi-core cable or a braided cable or a flexible flat cable formed by stacking a plurality of thin plates.

5. The connector assembly made of a novel shielding material according to claim 1, wherein a material of the insulating layer comprises one or more of tetraphenyl ethylene, polyvinyl chloride, polyethylene, polyamide, polytetrafluoroethylene, a hexafluoropropene-tetrafluoroethylene copolymer, an ethylene-terafluoroethlene copolymer, polypropylene, polyvinylidene fluoride, polyurethane, poly(terephthalic acid), a polyurethane elastomer, a styrene block copolymer, perfluoroalkoxy alkane, chlorinated polyethylene, polyphenylene sulfide, polystyrene, crosslinked polyolefin, ethylene propylene rubber, an ethylene-vinyl acetate copolymer, chloroprene rubber, nature rubber, styrene butadiene rubber, nitrile butadiene rubber, silicone rubber, butadiene rubber, polyisoprene rubber, ethylene-propylene rubber, butyl rubber, fluororubber, polyurethane rubber, polyacrylate rubber, chlorosulfonated polyethylene rubber, epichlorohydrin rubber, chlorinated polyethylene rubber, chlorosulfurized rubber, styrene-butadiene rubber, butadiene rubber, hydrogenated nitrile rubber, polysulfide rubber, crosslinked polyethylene, polycarbonate, polysulfone, polyphenyl ether, polyester, phenolic resin, urea formaldehyde, a styrene-acrylonitrile copolymer, polymethacrylate and polyoxymethylene resin.

6. The connector assembly made of a novel shielding material according to claim 1, wherein a material of each of the conductive particles comprises one or more of a metal, a conductive ceramic, a carbon-containing conductor, a solid electrolyte and a mixed conductor.

7. The connector assembly made of a novel shielding material according to claim 6, wherein a material of the metal comprises one or more of gold, silver, copper, nickel, titanium, tin, aluminium, cadmium, zirconium, chromium, cobalt, manganese, zinc, phosphorus, tellurium, beryllium, a tin-lead alloy, a silver-antimony alloy, palladium, a palladium-nickel alloy, or a silver-gold-zirconium alloy.

8. The connector assembly made of a novel shielding material according to claim 6, wherein the carbon-containing conductor comprises one or more of graphite powder, a carbon nanotube material, a graphene material, graphite silver or graphene silver.

9. The connector assembly made of a novel shielding material according to claim 1, wherein the volume ratio of the conductive particles in the insulating layer is 3.5% to 95%.

10. The connector assembly made of a novel shielding material according to claim 1, wherein the maximum diameters of the conductive particles account for 0.1% to 97% of the thickness of the insulating layer.

11. The connector assembly made of a novel shielding material according to claim 1, wherein the conductive particles in the insulating layer are conductive in an axial direction of the electric connection skeleton.

12. The connector assembly made of a novel shielding material according to claim 1, wherein the conductive particles in the insulating layer are conductive in a circumferential direction of the electric connection skeleton.

13. The connector assembly made of a novel shielding material according to claim 1, wherein a transfer impedance of the conductive particles in the insulating layer in the axial direction of the electric connection skeleton is less than 100 mΩ.

14. The connector assembly made of a novel shielding material according to claim 1, wherein an inner surface and an outer surface of the insulating layer have an insulation withstand voltage value of more than 2.1 KV against the conductive particles.

15. The connector assembly made of a novel shielding material according to claim 1, wherein a material of the inner shell comprises a conductive metal or a high polymer material comprising conductive particles.

16. The connector assembly made of a novel shielding material according to claim 15, wherein a material of each of the conductive particles comprises one or more of metal, a conductive ceramic, a carbon-containing conductor, a solid electrolyte and a mixed conductor; and a material of the high polymer material comprises one or more of tetraphenylethylene, polyvinyl chloride, polyethylene, polyamide, polytetrafluoroethylene, a hexafluoropropene-tetrafluoroethylene copolymer, an ethylene-terafluoroethlene copolymer, polypropylene, polyvinylidene fluoride, polyurethane, poly(terephthalic acid), a polyurethane elastomer, a styrene block copolymer, perfluoroalkoxy alkane, chlorinated polyethylene, polyphenylene sulfide, polystyrene, crosslinked polyolefin, ethylene propylene rubber, an ethylene-vinyl acetate copolymer, chloroprene rubber, nature rubber, styrene butadiene rubber, nitrile butadiene rubber, silicone rubber, butadiene rubber, polyisoprene rubber, ethylene-propylene rubber, butyl rubber, fluororubber, polyurethane rubber, polyacrylate rubber, chlorosulfonated polyethylene rubber, epichlorohydrin rubber, chlorinated polyethylene rubber, chlorosulfurized rubber, styrene-butadiene rubber, butadiene rubber, hydrogenated nitrile rubber, polysulfide rubber, crosslinked polyethylene, polycarbonate, polysulfone, polyphenyl ether, polyester, phenolic resin, urea formaldehyde, a styrene-acrylonitrile copolymer, polymethacrylate and polyoxymethylene resin.

17. The connector assembly made of a novel shielding material according to claim 16, wherein a material of the metal of each of the conductive particles comprises one or more of gold, silver, copper, nickel, titanium, tin, aluminium, cadmium, zirconium, chromium, cobalt, manganese, zinc, phosphorus, tellurium, beryllium, a tin-lead alloy, a silver-antimony alloy, palladium, a palladium-nickel alloy, or a silver-gold-zirconium alloy.

18. The connector assembly made of a novel shielding material according to claim 16, wherein the carbon-containing conductor of each of the conductive particles comprises one or more of graphite powder, a carbon nanotube material, a graphene material, graphite silver or graphene silver.

19. The connector assembly made of a novel shielding material according to claim 1, wherein the inner shell is electrically connected to the conductive particles.

20. The connector assembly made of a novel shielding material according to claim 1, wherein at least part of the insulating layer is provided with a recess in the connector, and the conductive particles are exposed in the recess; and a corresponding position of the inner shell is provided with a protrusion, and the protrusion is connected to the recess in a matching manner and is electrically connected to the conductive particles.

21. The connector assembly made of a novel shielding material according to claim 1, wherein an impedance between the conductive particles and the inner shell is less than 80 mΩ.

22. The connector assembly made of a novel shielding material according to claim 1, wherein a transfer impedance of the inner shell is less than 100 mΩ.

23. The connector assembly made of a novel shielding material according to claim 1, wherein the connector further comprises a shielding connection device, the shielding connection device is provided with at least one insertion portion and a contact portion, the insertion portion is inserted along an outer peripheral surface of the insulating layer and is electrically connected to the conductive particles, and the contact portion is electrically connected to the inner shell.

24. The connector assembly made of a novel shielding material according to claim 23, wherein the vertical length of the insertion portion in the radial direction of the electric connection skeleton is less than the thickness of the insulating layer.

25. The connector assembly made of a novel shielding material according to claim 23, wherein the contact portion is cylindrical, at least one insertion portion is arranged inside the cylindrical contact portion, and an outer wall of the cylindrical contact portion is electrically connected to an inner surface of the inner shell.

26. The connector assembly made of a novel shielding material according to claim 23, wherein the contact portion is columnar and is inserted into the inner shell and is electrically connected to the inner shell.

27. The connector assembly made of a novel shielding material according to claim 23, wherein the contact portion is an elastic sheet, and at least part of an outer surface of the elastic sheet is electrically connected to the inner surface of the inner shell.

28. The connector assembly made of a novel shielding material according to claim 23, wherein an impedance between the shielding connection device and the conductive particles is less than 80 mΩ, and an impedance between the shielding connection device and the inner shell is less than 80 mΩ.

29. The connector assembly made of a novel shielding material according to claim 1, wherein the thickness of the insulating layer is 0.1 to 3.8 mm.

30. The connector assembly made of a novel shielding material according to claim 1, wherein a cross section of the electric connection skeleton is in one or more of following shapes: a round shape, an oval shape, a rectangular shape, a polygonal shape, an A shape, a B shape, a D shape, an M shape, an N shape, an O shape, an S shape, an E shape, an F shape, an H shape, a K shape, an L shape, a T shape, a U shape, a V shape, a W shape, an X shape, a Y shape, a Z shape, a P shape, a semi-arc shape, an arc shape and a wavy shape.

31. The connector assembly made of a novel shielding material according to claim 1, wherein a cross-section shape of the electric connection skeleton is in a polygonal shape, and corners of the polygonal shape are all chamfered or rounded.

32. The connector assembly made of a novel shielding material according to claim 1, wherein the cross-sectional area of the electric connection skeleton is 3.5 mm² to 240 mm².

33. The connector assembly made of a novel shielding material according to claim 1, wherein the electric connection skeleton comprises at least one bending portion.

34. A vehicle, comprising the connector assembly made of a novel shielding material according to any one of claims 1 to 33.
